# EUROPEAN PATENT SPECIFICATION

(11) **EP 2 092 265 B1**
(45) Date of publication and mention of the grant of the patent: **10.04.2013**
(21) Application number: 07873475.3
(22) Date of filing: 13.11.2007
(51) Int. Cl.: F41H 7/00

(54) **UNMANNED GROUND ROBOTIC VEHICLE HAVING AN ALTERNATIVELY EXTENDIBLE AND RETRACTABLE SENSING APPENDAGE**
UNBEMANNTES ROBOTERBODENFAHRZEUG MIT AUSFAHRBARER BZW. EINZIEHBARER SENSORHALTERUNG
VÉHICULE ROBOTISÉ SANS PILOTE AYANT UN SUPPORT POUR SENSEUR ALTERNATIVEMENT EXTENSIBLE ET RÉTRACTABLE

(30) Priority: 13.11.2006 US 858806 P
(43) Date of publication of application: 26.08.2009
(73) Proprietor: Raytheon Company, Waltham MA 02451 (US)
(72) Inventor: JACOBSEN, Stephen, C., Salt Lake City, UT 84102 (US); PENSEL, Ralph, Sandy, UT 84092 (US); OLIVIER, Marc, Sandy, UT 84092 (US)
(74) Representative: Walker, Ross Thomson
(86) International application number: PCT/US2007/023869
(87) International publication number: WO 2008/127310

(56) References cited:
- DE-A1- 10 018 075
- DE-A1- 19 704 080
- US-A- 5 465 525
- US-A1- 2004 216 931
- US-A1- 2006 225 928
- "3-D VISION AND URCHIN" REVUE INTERNATIONALE DE DEFENSE, INTERAVIA S.A. COINTRIN-GENEVE, CH, vol. 21, no. 10, 1 October 1988 (1988-10-01), page 1292, XP000002407
- "ADVERTISEMENT" INTERNATIONAL DEFENSE REVIEW, JANE'S INFORMATION GROUP, COULSDON, SURREY, GB, vol. 23, no. 11, 1 November 1990 (1990-11-01), page 54, XP000175389 ISSN: 0020-6512

## Description

### FIELD OF THE INVENTION

The present invention relates to small, unmanned, ground robotic vehicles. More particularly, the present invention relates to an unmanned ground robotic vehicle having a sensing element coupled to an alternatively extendable and retractable appendage.

### BACKGROUND OF THE INVENTION AND RELATED ART

Robotics is an active area of research, and many different types of robotic vehicles have been developed for various tasks. For example, unmanned aerial vehicles have been quite successful in military aerial reconnaissance. Less success has been achieved with unmanned ground vehicles, however, in part because the ground environment presents a significantly more difficult environment in which to operate as compared to the airborne environment.

For example, in contrast to the airborne environment, which typically provides few obstacles and excellent visibility, ground environments typically provide widely varying terrain and various obstacles. Obstacles provide multiple challenges: not only may they need to be climbed over, under, around or moved, but obstacles may block visibility of areas under, over, or behind the obstacle. Navigating a ground environment can involve a lot of backtracking as dead ends and impassible routes may not be recognizable until they are entered. Moreover, hazards may be hidden until it is too late to avoid them.

Larger vehicles can provide improved visibility and address some of these challenges. Large vehicles, however, have many drawbacks, such as increased power consumption, reduced stealth, and less ability to negotiate narrow passages and small openings. Hence, there is a desire for improved techniques to deal with the navigation and sensing challenges presented by obstacles.

Another challenge facing unmanned ground vehicles is the threat presented by a hostile environment. Any position hidden from view of the unmanned ground vehicle's sensor system is a potential hiding place for an adversary. Maneuvering the unmanned ground vehicle into a position from which it can see a previously hidden position unfortunately exposes the vehicle to a potential threat at that position. Although reconnaissance of an area beforehand can help to avoid these threats, such information is often not available. Moreover, one valuable use for robotic vehicles is to provide such reconnaissance before personnel are brought into an area. Accordingly, it is desirable for a robotic vehicle to be self-contained with respect to obtaining sensor information required to accomplish its mission.

An example of a prior art arrangement is disclose4 in US Published Patent Application No. US 2004/216931 A1 (WON CHIKYUNG), which represents a starting point for the present invention.

### SUMMARY OF THE INVENTION

The present invention includes an unmanned ground robotic vehicle which helps to overcome problems and deficiencies inherent in the prior art, and is set forth in the appended claims.

### BRIEF DESCRIPTION OF THE DRAWINGS

The present invention will become more fully apparent from the following description and appended claims, taken in conjunction with the accompanying drawings. Understanding that these drawings merely depict exemplary embodiments of the present invention they are, therefore, not to be considered limiting of its scope. It will be readily appreciated that the components of the present invention, as generally described and illustrated in the figures herein, can be arranged and designed in a wide variety of different configurations. Nonetheless, the invention will be described and explained with additional specificity and detail through the use of the accompanying drawings in which:
FIG. 1 illustrates a side view of an unmanned ground vehicle having an alternatively extendible and retractable sensing appendage in accordance with a first illustrative embodiment which does not form part of the invention;
FIG. 2 illustrates a side view of the unmanned ground vehicle of FIG. 1 with the sensing appendage in a retracted position;
FIG. 3 illustrates a perspective view of an unmanned ground vehicle in accordance with a second illustrative embodiment which does not form part of the invention;
FIG. 4 illustrates a perspective view an unmanned ground vehicle in accordance with a third exemplary embodiment of the invention; and
FIG. 5 illustrates a flow chart of a method of remote sensing in an environment using an unmanned ground robotic vehicle in accordance with an exemplary embodiment of the invention.

### DETAILED DESCRIPTION OF EXEMPLARY EMBODIMENTS

The following detailed description of exemplary embodiments of the invention makes reference to the accompanying drawings, which form a part hereof and in which are shown, by way of illustration, exemplary embodiments in which the invention may be practiced. While these exemplary embodiments are described in sufficient detail to enable those skilled in the art practice the invention, it should be understood that other embodiments may be realized and that various changes to the invention may be made without departing from the scope of the appended claims. Thus, the following more detailed description of the embodiments of the present invention is not intended to limit the scope of the invention, as claimed, but is presented for purposes of illustration only and not limitation to describe the features and characteristics of the present invention, to set forth the best mode of operation of the invention, and to sufficiently enable one skilled in the art to practice the invention. Accordingly, the scope of the present invention is to be defined solely by the appended claims.

The following detailed description and exemplary embodiments of the invention will be best understood by reference to the accompanying drawings, wherein the elements and features of the invention are designated by numerals throughout.

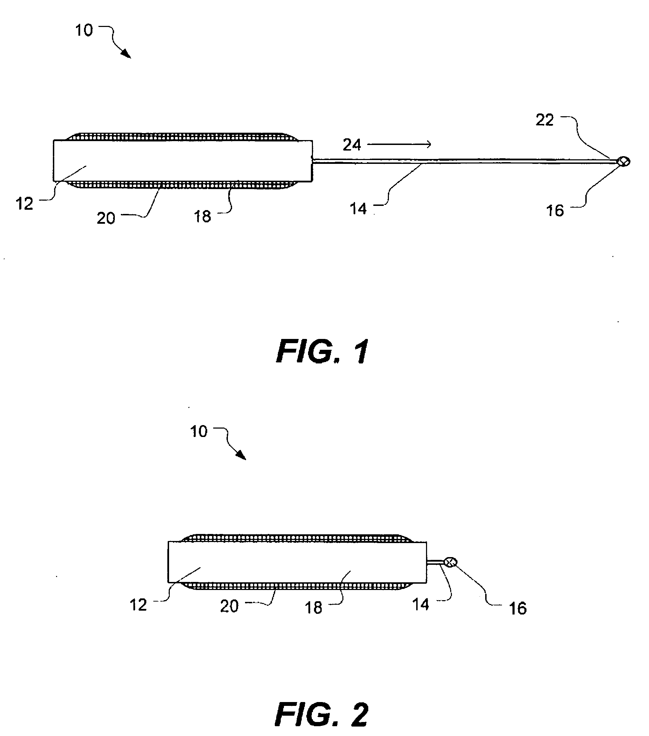

With reference to FIG. 1, shown is an illustration of an unmanned ground vehicle according to a first illustrative embodiment which does not form part of the present invention. Specifically, FIG. 1 illustrates the unmanned ground vehicle 10 as including a vehicle body 12, an appendage 14, and a sensor 16. The vehicle body can include a frame 18 with an endless track 20 mounted therein to enable the vehicle to move within an environment. A portion of the endless track contacts the ground in order to provide propulsion for the unmanned ground vehicle. For example, commonly owned and co-pending U.S. Provisional Patent Applications No. 60/858,917, entitled "Serpentine Robotic Crawler", and No. 60/858,91 S, entitled "Tracked Robotic Crawler Having a Moveable Arm", filed November 13, 2006 and incorporated herein by reference, describe various embodiments of vehicle bodies which can be used in embodiments of the present invention. Various other body configurations can be used as well, as will occur to one of skill in the art having possession of this disclosure.

The appendage 14 extends outwardly from the vehicle body, but can be retracted inwardly toward the vehicle body, as shown in FIG. 2. For example, the appendage can be retracted into the vehicle body, partially into the vehicle body, or along side the vehicle body. The sensor can be mounted at a distal end 22 of the appendage, and thus is able to sense the environment at a location remote from the immediate area of the vehicle frame.

One advantage of the unmanned ground vehicle 10 is that the sensor 16 allows the enhancement of the sensing abilities of the unmanned ground vehicle without the need to place the vehicle body 12 at risk. For example, the appendage 14 can be extended to peek around a corner, peer over a drop off, or peak up from underneath a protected covered area, while the vehicle body 12 remains safely protected. Risk of attack from a hidden adversary is primarily limited to the sensor and appendage. Even if the sensor and/or appendage are attacked and damaged, the unmanned ground vehicle may continue operating. Capability of the unmanned ground vehicle can be enhanced by including multiple appendages with corresponding sensors.

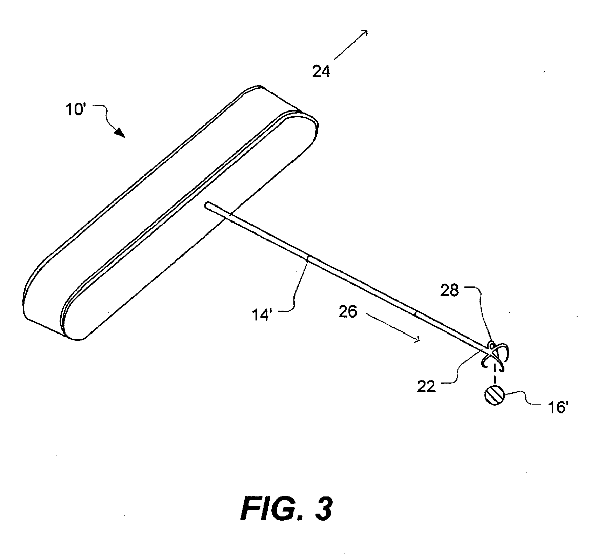

The appendage 14 need not be limited to extending in a forward direction along a line of travel 24 of the vehicle body 12 as shown in FIG. 1. FIG. 3 illustrates an alternate illustrative embodiment, which does not form part of the invention, of an unmanned ground vehicle 10', wherein the appendage 14' extends in a lateral direction 26 relative to the line of travel 24 of the vehicle body. Other variations can be used as well. For example, a vertically extending appendage can place the sensor at a height above that which is normally visible or reachable by the vehicle body.

Another advantage of the appendage 14 is that sensing can be performed for areas that cannot be reached by the unmanned ground vehicle 10. For example, the appendage can be inserted into openings or holes too small for the unmanned ground vehicle to enter. The appendage can also be articulated, for example, by including joints, to provide greater flexibility in the positioning of the sensor 16. This can also allow sensing of areas not within line of sight of the vehicle body 12.

The appendage 14 may be designed to be self-supporting. A self-supporting appendage need not be resting on a support surface, and thus, for example, can extend vertically or horizontally over an edge. A self-supporting appendage, however, may be limited in the distance that can be reached.

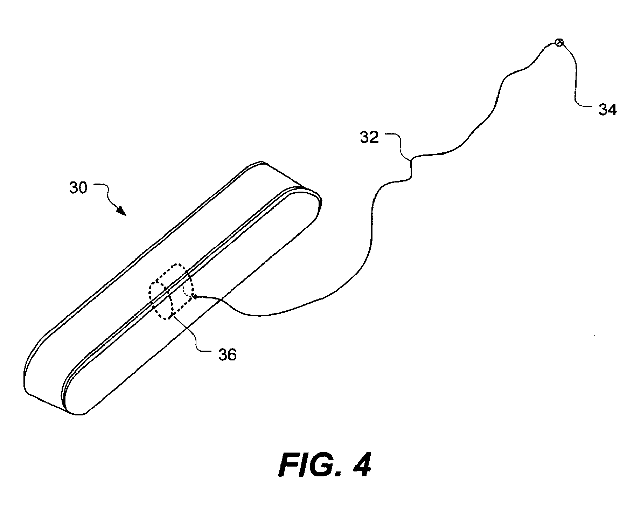

Alternatively, the appendage according to the invention is flexible and non self-supporting and can be extended to slide along the ground surface. FIG. 4 illustrates an unmanned robotic vehicle 30 having a flexible, non-self supporting appendage 32 and sensor 34. For example, the appendage can include a fiber optic cable that can be retracted onto a spool 36. Because high bandwidths can be transmitted by fiber optic cables, the sensor can be quite sophisticated, providing large sensor data rates that are communicated back to the vehicle body. By using fiber optic or small diameter wire cables, long distances can be provided between the vehicle body and the sensor while using a relatively small spool.

Various ways of using and deploying the flexible appendage 32 are possible. For example, the flexible appendage can be extended to go down a hole, using gravity to help pull the sensor 34 and appendage into the hole. As another example, in a confined area, such as a pipe, the appendage can be extended to slide along the ground surface. Achievable extension distances in such a deployment depend on the amount of friction between the appendage and the ground surface and the axial stiffness of the appendage. By axial stiffness is meant the resistance of an appendage to deflection by force applied in the direction of the longitudinal axis of the appendage. As the length of deployed appendage increases, the friction opposing sliding the appendage increases. For a sufficiently long deployed length, this friction will be high enough that attempts to push the appendage out a further distance will result in buckling of the appendage. This buckling need not cause damage, for example, to a flexible fiber optic or similar cable, but may limit the ability of the sensor to deploy any further. The amount of friction will vary depending on the environment. For example, the interior of a wet pipe may provide relatively low friction, while an asphalt surface may provide relatively high friction.

The flexible appendage 32 can also allow the sensor 34 to be deployed to a point that is not within line of sight of the vehicle body. For example, the appendage can be snaked down a pipe that has several bends and/or joints. Not only does the flexible appendage increasing the ability of the sensor to access remote areas, the appendage also allows the unmanned ground vehicle to remain in a more protected position while extending the appendage.

The flexible appendage and sensor 34 can be relatively small compared to the unmanned robotic vehicle 30'. This can provide for discrete surveillance, since the unmanned robotic vehicle need not approach too closely to the area being monitored. The flexible appendage can then be slowly and quietly extended into the area to be monitored.

Another mode of operation using the appendage 32 is to deploy the sensor 34 behind the unmanned robotic vehicle 30 as it moves. For example, the sensor can be placed in a first location, and then the unmanned ground vehicle moved to a second location while extending the appendage.

While the sensor has been shown and described as being positioned at a distal end of the appendage, this is not essential. The sensor may be placed on the vehicle body, and communicate with the remote environment through the appendage. For example, for a chemical sensor, sampling of the remote environment may be provided by taking samples through a straw or tube-like appendage.

The sensor may be used to collect information used for navigation of the unmanned ground vehicle. Information collected by the sensor can be fed back into the navigational system of the unmanned ground vehicle. The unmanned ground vehicle can probe the environment remote from the vehicle in various directions by extending and moving the appendage to obtain an increased situational awareness. The additional information obtained can be used to plan more efficient and safe movements. Navigation can take into account both the immediate environment (e.g. using data obtained from a sensor mounted on the vehicle body) and the remote environment (using data obtained from the sensor coupled to the appendage).

Sensor data may also be communicated to another location by the unmanned ground vehicle, for example, in reconnaissance or surveillance applications. Various ways of communication are known in the art which can be applied, including for example, wireless radio, free space optical, and ultrasonic audio communication links. Use of the unmanned ground vehicle in such situations can help to avoid exposing personnel to hazardous conditions. The unmanned ground vehicle can thus be sent into a dangerous area to collect chemical, biological and various other physical measurements to assess the situation.

Various types of sensors can be used in embodiments of the present invention. More particularly, sensor types useful with the present invention include a camera, a chemical sensor, a biological sensor, an optical sensor, a moisture sensor, a vibration sensor, a temperature sensor, an electromagnetic sensor, a sound sensor, a force sensor and the like. Although most sensors are passive collectors of information regarding their environment, active sensors are also known, and can be used with the unmanned ground vehicle. Active sensors collect information about the environment by actively probing the environment, including for example, sonar, radar, lidar, cameras with illumination, and the like. More particularly, it may be desirable to include a light source with a camera sensor to provide illumination by which the camera can see. Cameras may operate in the visible, infrared, ultraviolet, or other regions of the electromagnetic spectrum, or even operate simultaneously over several different regions of the electromagnetic spectrum. Other sensor types which can be used include radioactive isotope sensors (gamma detectors, beta detectors, alpha particle detectors), seismic sensors, image intensifiers (e.g., night vision), thermographic cameras, pressure sensors, magnetometers) and the like. Sampling type sensors (e.g., for sampling of terrain, fluid, chemicals, etc.) can also be used. Multiple sensors and sensor types can be coupled to the appendage.

The appendage can also include a manipulator, as illustrated in FIG. 3. The manipulator 28 is disposed near a distal end 22 of the appendage 14'. For example, the manipulator may be a claw that can selective grasp and ungrasp an object. The unmanned ground vehicle 10' can thus navigate to a particular point, and either pick up or deposit a payload at that point using the manipulator and the appendage.

In another embodiment, the sensor 16' can be removably attached to the appendage. In other words, the sensor is the payload. This allows the sensor to be picked up and put down by the appendage 14'. The sensor can be self-contained, including a power source and communications link to allow sensor data to be transmitted to another location. The unmanned ground vehicle may include multiple sensors that can be deployed in several locations using the manipulator.

A number of unmanned ground vehicles as described above can be deployed simultaneously. The unmanned ground vehicles can communicate their sensor information to a sensor integration point, where additional processing is performed. Various ways are known in the art for combining sensor data to achieve enhanced capabilities. For example, electromagnetic, vibration, or sound energy sensors can be combined into virtual arrays providing the ability to triangulate, position locate, and resolve sources of energy. Visual images of an area from multiple positions can allow stereoscopic views and three-dimensional maps to be created.

Multiple unmanned group vehicles may also be deployed to provide for communications relays (e.g. for radiowave or lightwave communication), perimeter protection or sensing, detection of hazardous conditions (e.g. mines, improvised explosive devices, ordnance, and the like).

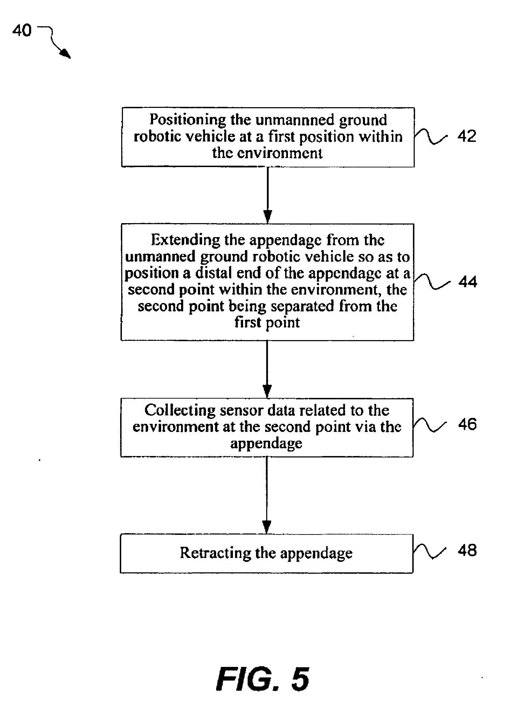

FIG. 5 illustrates a flow chart of a method of remote sensing in an environment using an unmanned ground robotic vehicle. As described above, the unmanned ground robotic vehicle has an alternatively extensible and retractable appendage with a sensor coupled thereto. The method, shown generally at 40, includes positioning 42 the unmanned ground robotic vehicle at a first point within the environment. For example, the vehicle may be navigated autonomously or under user control to the first point. Another step of the method is extending 44 the appendage from the unmanned ground robotic vehicle to position a distal end of the appendage at a second point within the environment. The second point may not be in line of sight of the unmanned robotic vehicle. For example, as discussed above, the second point may be past a corner or over the edge of a ledge or hole. Once the appendage is positioned, the method can include collecting 46 sensor data related to the environment at the second point via the appendage. Another step can include retracting 48 the appendage.

Summarizing and reiterating to some extent, an unmanned ground vehicle in accordance with embodiments of the present invention can provide enhanced sensing and mobility. A sensing appendage allows sensing of environments remote from the vehicle without requiring exposure of the vehicle to the risks of the remote environment. Rigid appendages may allow sensing around corners and bends within short range distances. Flexible appendages may allow sensing at great distances, for example, down deep holes and long tunnels. Sensor data from groups of unmanned ground vehicles can be combined to provide enhanced sensing capabilities.

The foregoing detailed description describes the invention with reference to specific exemplary embodiments. However, it will be appreciated that various modifications and changes can be made without departing from the scope of the present invention as set forth in the appended claims. The detailed description and accompanying drawings are to be regarded as merely illustrative, rather than as restrictive, and all such modifications or changes, if any, are intended to fall within the scope of the present invention as described and set forth herein.

More specifically, while illustrative exemplary embodiments of the invention have been described herein, the present invention is not limited to these embodiments, but includes any and all embodiments having modifications, omissions, combinations (e.g., of aspects across various embodiments), adaptations and/or alterations as would be appreciated by those in the art based on the foregoing detailed description. The limitations in the claims are to be interpreted broadly based the language employed in the claims and not limited to examples described in the foregoing detailed description or during the prosecution of the application, which examples are to be construed as non-exclusive. For example, in the present disclosure, the term "preferably" is non-exclusive where it is intended to mean "preferably, but not limited to."

Accordingly, the scope of the invention should be determined solely by the appended claims rather than by the descriptions and examples given above.

## Claims

1. An unmanned ground robotic vehicle (30) comprising:
a vehicle body including a frame with a single endless track mounted therein and being capable of movement within an environment;
an appendage (32) coupled to the vehicle body and configured to be extended in an outward direction from the vehicle body and at least partially retracted in an inward direction toward the vehicle body, wherein the appendage (32) is flexible and non self-supporting and can be extended to slide along a ground surface; and
a sensor (34) coupled to the appendage and configured to sense the environment at a location remote from the immediate area of the vehicle frame.

2. The system of claim 1, wherein the sensor (34) is disposed on the appendage (32) at a distal end.

3. The system of claim 2, wherein the sensor (34) is removably attachable to the appendage (30).

4. The system of claim 1, wherein the sensor (34) comprises a sensor type selected from the group consisting of a camera, a chemical sensor, an optical sensor, a force sensor, and any combination of these.

5. The system of claim 1, wherein the appendage (32) is configured to extend in a substantially forward direction relative to a line of travel of the vehicle body.

6. The system of claim 1, wherein the appendage (32) is configured to extend in a substantially lateral direction relative to a line of travel of the vehicle body.

7. The system of claim 1, wherein the appendage (32) further comprises a manipulator disposed near a distal end of the appendage (32).

8. The system of claim 1, wherein the appendage (32) further comprises an optical fiber.

9. The system of claim 8, wherein the appendage (32) further comprises a reel for spooling the optical fiber on when the appendage (32) is retracted.

10. A method of remote sensing in an environment using an unmanned ground robotic vehicle (30) including a frame with a single endless track mounted therein and having an extensible and retractable appendage (32) with a sensor (34) coupled thereto, comprising the steps of:
positioning the unmanned ground robotic vehicle (30) at a first point within the environment; extending the appendage (32) from the unmanned ground robotic vehicle (30) so as to position a distal end of the appendage (32) at a second point within the environment, the second point being separated from the first point, wherein the appendage (32) is flexible and non self-supporting and can be extended to slide along a ground surface ;
collecting sensor data related to the environment at the second point via the appendage (32); and
retracting the appendage (32).

11. The method of claim 10 further comprising the step of removably attaching a payload to the distal end of the appendage (32).

12. The method of claim 10 further comprising the step of controlling movement of the unmanned robotic vehicle (30) based on the sensor data.

13. The method of claim 10 further comprising the step of combining the sensor data with additional sensor data received from additional unmanned ground vehicles (30).

## Patentansprüche

1. Unbemanntes Roboterbodenfahrzeug (30), umfassend:
einen Fahrzeugaufbau, der einen Rahmen mit einer darin angebrachten einzelnen Endlosraupenkette einschließt und zu einer Bewegung in einer Umgebung imstande ist;
ein Ansatzteil (32), das mit dem Fahrzeugaufbau gekoppelt und dazu konfiguriert ist, in eine Auswärtsrichtung von dem Fahrzeugaufbau ausgefahren und zumindest teilweise in einer Einwärtsrichtung zum Fahrzeugaufbau zurückgezogen zu werden, wobei das Ansatzteil (32) elastisch und nicht selbsttragend ist und so ausgefahren werden kann, dass es entlang einer Bodenfläche gleitet; und
einen Sensor (34), der mit dem Ansatzteil gekoppelt und dazu konfiguriert ist, die Umgebung an einem von dem unmittelbaren Bereich des Fahrzeugrahmens entfernten Ort zu vermessen.

2. System nach Anspruch 1, wobei der Sensor (34) auf dem Ansatzteil (32) an einem distalen Ende angeordnet ist.

3. System nach Anspruch 2, wobei der Sensor (34) entfernbar an dem Ansatzteil (30) befestigt ist.

4. System nach Anspruch 1, wobei der Sensor (34) einen Sensortyp umfasst, der aus der Gruppe ausgewählt ist, die aus einer Kamera, einem chemischen Sensor, einem optischen Sensor, einem Kraftsensor und einer beliebigen Kombination derselben besteht.

5. System nach Anspruch 1, wobei das Ansatzteil (32) dazu konfiguriert ist, sich in einer im Wesentlichen vorwärts gerichteten Richtung relativ zur Bewegungslinie des Fahrzeugaufbaus zu erstrecken.

6. System nach Anspruch 1, wobei das Ansatzteil (32) dazu konfiguriert ist, sich in einer im Wesentlichen lateralen Richtung relativ zur Bewegungslinie des Fahrzeugaufbaus zu erstrecken.

7. System nach Anspruch 1, wobei das Ansatzteil (32) ferner einen Manipulator umfasst, der nahe einem distalen Ende des Ansatzteils (32) angeordnet ist.

8. System nach Anspruch 1, wobei das Ansatzteil (32) ferner eine optische Faser umfasst.

9. System nach Anspruch 8, wobei das Ansatzteil (32) ferner eine Bandspule umfasst, um darauf die optische Faser aufzuspulen, wenn das Ansatzteil (32) zurückgezogen wird.

10. Verfahren zur Fernmessung in einer Umgebung unter Verwendung eines unbemannten Roboterbodenfahrzeugs (30), das einen Rahmen mit einer darin angebrachten einzelnen Endlosraupenkette einschließt und ein ausfahrbares und einziehbares Ansatzteil (32), an dem ein Sensor (34) angekoppelt ist, aufweist, umfassend die folgenden Schritte:
Positionieren des unbemannten Roboterbodenfahrzeugs (30) an einem ersten Punkt in der Umgebung;
Ausfahren des Ansatzteils (32) aus dem unbemannten Roboterbodenfahrzeug (30), um ein distales Ende des Ansatzteils (32) an einem zweiten Punkt in der Umgebung zu positionieren, wobei der zweite Punkt von dem ersten Punkt getrennt ist, wobei das Ansatzteil (32) elastisch und nicht selbsttragend ist und so ausgefahren werden kann, dass es längs einer Bodenfläche gleitet;
Sammeln von Sensordaten in Bezug auf die Umgebung an dem zweiten Punkt über das Ansatzteil (32); und
Zurückziehen des Ansatzteils (32).

11. Verfahren nach Anspruch 10, ferner umfassend den Schritt des entfernbaren Anbringens einer Nutzlast am distalen Ende des Ansatzteils (32).

12. Verfahren nach Anspruch 10, ferner umfassend den Schritt des Steuerns der Bewegung des unbemannten Roboterfahrzeugs (30) auf der Basis der Sensordaten.

13. Verfahren nach Anspruch 10, ferner umfassend den Schritt des Kombinierens der Sensordaten mit zusätzlichen Sensordaten, die von zusätzlichen unbemannten Bodenfahrzeugen (30) empfangen werden.

## Revendications

1. Un véhicule terrestre robotisé sans pilote (30) se composant de ce qui suit :
un corps de véhicule comprenant un châssis sur lequel est montée une chenille continue simple et capable de se déplacer dans un environnement ;
un appendice (32) raccordé au corps du véhicule et configuré pour être déployé vers l'extérieur du corps du véhicule et au moins en partie rentré vers l'intérieur, vers le corps du véhicule, l'appendice (32) étant souple et non-autoportant et pouvant être déployé de façon à glisser le long d'une surface au sol ; et
un capteur (34) raccordé à l'appendice et configuré pour détecter l'environnement à un emplacement éloigné des environs immédiats du châssis du véhicule.

2. Le système de la revendication 1, dans lequel le capteur (34) est disposé sur l'appendice (32) à une extrémité distale.

3. Le système de la revendication 2, dans lequel le capteur (34) est fixé à l'appendice (30) de manière amovible.

4. Le système de la revendication 1, dans lequel le capteur (34) est un type de capteur sélectionné parmi les suivants : une caméra, un capteur chimique, un capteur optique, un capteur de force ou n'importe quelle combinaison de ces capteurs.

5. Le système de la revendication 1, dans lequel l'appendice (32) est configuré pour se déployer sensiblement vers l'avant par rapport à une ligne de marche du corps du véhicule.

6. Le système de la revendication 1, dans lequel l'appendice (32) est configuré pour se déployer de manière sensiblement latérale par rapport à une ligne de marche du corps du véhicule.

7. Le système de la revendication 1, dans lequel l'appendice (32) comprend également un manipulateur disposé près d'une extrémité distale de l'appendice (32).

8. Le système de la revendication 1, dans lequel l'appendice (32) comprend également une fibre optique.

9. Le système de la revendication 8, dans lequel l'appendice (32) comprend également une bobine sur laquelle la fibre optique s'enroule lorsque l'appendice (32) est rentré.

10. Un procédé de télédétection dans un environnement utilisant un véhicule terrestre robotisé sans pilote (30), y compris un châssis sur lequel une chenille continue simple est montée, et muni d'un appendice extensible et rétractable (32) auquel un capteur (34) est raccordé, se composant des opérations suivantes :
positionner le véhicule terrestre robotisé sans pilote (30) à un premier endroit dans l'environnement ;
déployer l'appendice (32) du véhicule terrestre robotisé sans pilote (30) de façon à positionner une extrémité distale de l'appendice (32) à un deuxième endroit dans l'environnement, le deuxième endroit étant séparé du premier, l'appendice (32) étant souple et non-autoportant et pouvant être déployé de manière à glisser le long d'une surface au sol ;
recueillir les données de détection liées à l'environnement au deuxième point via l'appendice (32) ; et
rentrer l'appendice (32).

11. Le procédé de la revendication 10 supposant également de fixer de manière amovible une charge à l'extrémité distale de l'appendice (32).

12. Le procédé de la revendication 10 supposant également de contrôler les mouvements du véhicule robotisé sans pilote (30) en fonction des données de détection.

13. Le procédé de la revendication 10 supposant également de combiner les données de détection avec les données de détection supplémentaires reçues de véhicules terrestres sans pilote supplémentaires (30).
